# EUROPEAN PATENT APPLICATION

(11) **EP 2 077 508 A1**
(43) Date of publication of application: **08.07.2009**
(21) Application number: 08171977.5
(22) Date of filing: 17.12.2008
(51) Int. Cl.: G06F 17/30

(54) **Method and system for integrating multiple authoring applications in a collaborative environment**

(30) Priority: 20.12.2007 US 15465 P; 05.12.2008 US 315730 P
(71) Applicant: SIEMENS CORPORATE RESEARCH, INC., Princeton, New Jersey 08540 (US); Siemens Aktiengesellschaft, 80333 München (DE)
(72) Inventor: Lo, George, Plainsboro, NJ 08536 (US); Lange, Ronald, Fuerth, 90766 (US)
(74) Representative: Clarke, Alison Clare

(57) **Abstract**

A collaborative authoring system and method is disclosed. An integration platform having a backbone layer and an integration layer is used to enable collaborative authoring of data between multiple authoring applications. When a request for a data object is received at the integration platform from an authoring application, it is determined whether the data object is stored in the integration layer. If the data object is not stored in the integration layer, a data cluster including the data object is loaded to the integration layer from the backbone layer, and the data cluster is locked in the backbone layer. The data object is loaded from the integration layer to the authoring application, and the data object is locked in the integration layer. Once the data object is modified, the modified data object is received at the integration layer, and the data object is unlocked in the integration layer. The modified data object is propagated to the backbone layer, and if there are no remaining locks on data objects of the cluster, the cluster is unlocked in the backbone layer.

## Description

This application claims the benefit of U.S. Provisional Application No. 61/015,465, filed December 20, 2007, the disclosure of which is herein incorporated by reference.

### BACKGROUND OF THE INVENTION

The present invention relates to collaborative authoring using software applications, and more particularly, to integrating multiple authoring applications in a collaborative environment.

Collaborative authoring refers to multiple users using software implemented authoring applications to author or edit common project data. Some authoring applications, such as NX, Automation Designer, and STEP 7, support cooperative work on the same data or project, typically for 1-10 users at a time. Such applications tend to be rich applications with very complex graphical interaction that allow users to be creative and express themselves to create new knowledge or combine existing knowledge to produce unique artifacts. It is challenging to provide collaboration between these authoring applications because data that is used in one application can be reused by another application and can influence data that is authored by another application. Furthermore, the requirements for collaboration vary with respect to the users and the data objects that they work on.

A collaborative project is typically modeled as a data object model. Typically, a small set of users, or a "team" of 1-10 people, work on a common task, such that they work mostly on the same set of data objects. An important goal in collaboration is to maintain the fidelity of the project data, for example by ensuring that two users cannot modify the same object at the same time. Another important goal is the timeliness of data. This means that data entered by a user should be visible to all other users of the team as soon as it is committed.

In many instances, such as in a large manufacturing plant, many teams work on the project data (in parallel and in sequence). In such cases, the dependencies between data modified by different teams, as well as the fidelity of the project data, is important. However, different teams do not often modify the same sets of data objects in parallel. Also, the collaborations between the teams may not require an immediate update of the data when changes are committed. Instead, other teams typically need to know that something has been changed, so the other teams can control when to incorporate these changes into the data on which they are working. In many large-scale collaboration situations, such as a large manufacturing plant, it is necessary for more than 1000 people to work together on project data collaboratively.

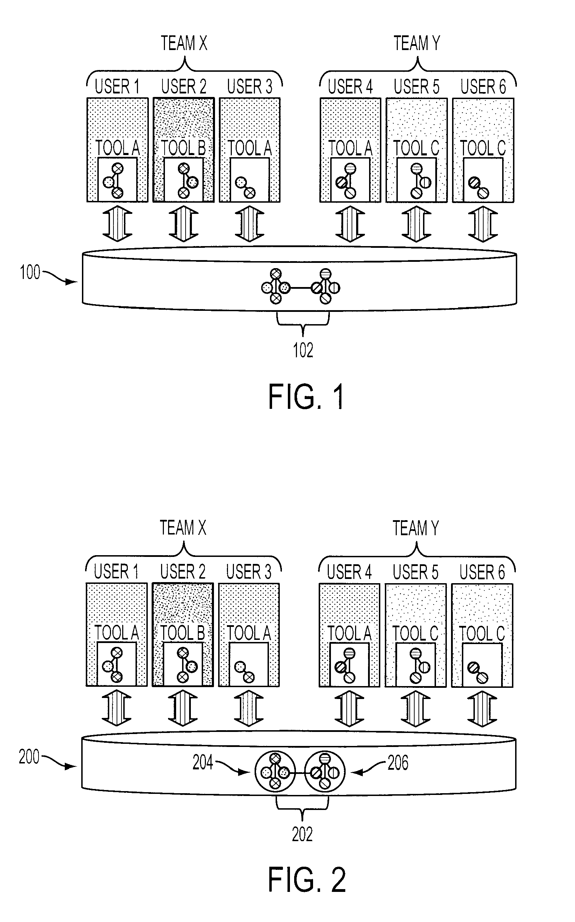

FIG. 1 illustrates a conventional collaborative authoring system. As illustrated in FIG. 1, the project data is organized in a data object model 102 made up of various objects. Users 1, 2, and 3 are grouped into team X and users 4, 5, and 6 are grouped into team Y. The users in teams X and Y can modify data objects by locking the corresponding data objects in the software layer 100. The software layer 100 of FIG. 1 Is designed to fulfill the requirements of team-internal collaboration, and is also used for cross-team collaborations. This software layer 100 uses a fine grained locking granularity, such that each data object is individually locked. This solution does not scale well to a large number of users since the requirement for more than 1000 users cannot be efficiently achieved if the object model is very fine grained. An example of this type of software layer is the AUTAPI/OM layer In STEP7 and PCS7, which allows approximately five users to work concurrently on the same project data.

FIG. 2 illustrates another conventional collaborative authoring system. As illustrated in FIG. 2, a software layer 200 is provided that fulfills the needs of cross-team collaboration. This requires clustering of objects in the data object model 202 to achieve acceptable performance for cross-team collaboration. As shown in FIG. 2, the data object model is sub-divided into two clusters 204 and 206 of objects. This clustering restricts the possible concurrent work within a team because a whole cluster is locked when any user in a team is working on an object in the cluster. Accordingly, the software layer 200 of FIG. 2 does not provide efficient team internal collaboration but provides good support for a large number of teams. An example of this type of software layer is the A&D PL product Teamcenter.

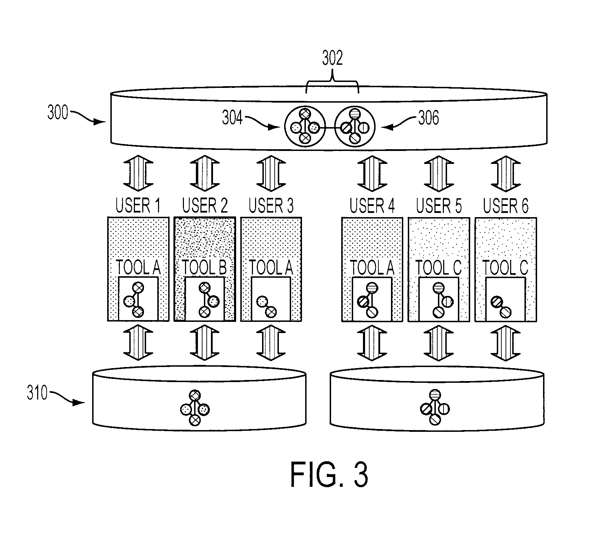

FIG. 3 illustrates yet another conventional collaborative authoring system. As illustrated in FIG. 3, two separate software layers 300 and 310 are provided. The top layer 300 stores the data object model 302, and fulfills the requirements of cross-team collaboration. The data object model is sub-divided into clusters 304 and 306 of objects. The lower layer 310 fulfills the requirements of team internal collaboration. The system of FIG. 3 fulfills the requirements of team internal and cross-team collaboration, but puts responsibility on the user to ensure a correct workflow. For example, a user has to ensure that data is properly checked out of the top layer 300 manually before a team can work with the data in the lower layer 310. Further, a user must decide when to publish data back to the top layer 300. These manual decisions are susceptible to user error.

### BRIEF SUMMARY OF THE INVENTION

The present invention provides a method and system for collaborative authoring. Embodiments of the present invention utilize an integration platform having a backbone layer and an integration layer in order to fulfill requirements of cross-team and team internal collaboration.

In one embodiment of the present invention, an integration layer having a backbone layer and integration layer is used to enable collaboration between multiple authoring applications. When a request for a data object is received at the integration platform from an authoring application, it is determined whether the data object is stored in the integration layer. If the data object is not stored in the integration layer, a data cluster including the data object is loaded to the integration layer from the backbone layer, and the data cluster is locked in the backbone layer. The data object is loaded from the Integration layer to the authoring application, and the data object is locked in the integration layer. Once the data object is modified, the modified data object is received at the integration layer, and the data object is unlocked in the integration layer. The modified data object is propagated to the backbone layer, and if there are no remaining locks on data objects of the cluster, the cluster is unlocked in the backbone layer. When the modified data object is received in the integration layer, the data object can be updated for other authoring applications connected to the same instance of the Integration layer. When the modified data object is propagated to the backbone layer, other instances of the integration layer can be notified.

These and other advantages of the invention will be apparent to those of ordinary skill in the art by reference to the following detailed description and the accompanying drawings.

### BRIEF DESCRIPTION OF THE DRAWINGS

FIG. 1 illustrates a conventional collaborative authoring system;

FIG. 2 illustrates another conventional collaborative authoring system;

FIG. 3 illustrates yet another conventional collaborative authoring system;

F1G. 4 illustrates a collaborative authoring system according to an embodiment of the present invention;

FIGS. 5A - 5F illustrate dynamic behavior of the collaborative authoring system of FIG. 4 according to an embodiment of the present invention;

FIG. 6 illustrates a method of loading data to be modified in a collaborative authoring system according to an embodiment of the present invention;

FIG. 7 illustrates a method of saving modified data in a collaborative authoring system according to an embodiment of the present invention; and

FIG. 8 is a high level block diagram of a computer capable of implementing the present invention.

### DETAILED DESCRIPTION

The present invention is directed to a system and method for collaborative authoring. Embodiments of the present Invention utilize a two-layer integration platform having a backbone layer and an integration layer.

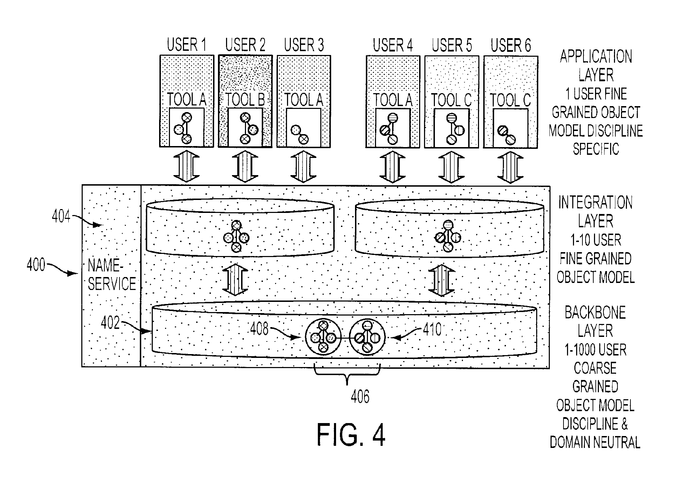

FIG. 4 illustrates a collaborative authoring system according to an embodiment of the present invention. As illustrated in FIG. 4, an integration platform 400 Is a two layer platform having a backbone layer 402 and an integration layer 404. The integration layer provides access to project data to multiple users (user 1 - user 6) via multiple authoring applications (Tool A, Tool B, and Tool C). The Individual authoring applications (Tools A, B, and C) work on the integration platform 400. internally, the authoring applications connect to the Integration layer 404, which fulfills the requirements of team-internal collaboration. In particular, the integration layer 404 provides fine-grained locking granularity for individual data objects being authored or modified by particular users. The integration layer 404 also ensures that the data is properly handled on the backbone layer 402. The backbone layer 402 fulfills requirements of cross-team collaboration. The backbone layer 402 stores a data object model 406, which is subdivided into clusters 408 and 410 of data objects. The system of FIG. 4 only requires clustering of the project data with respect to the backbone layer 402. The relationship between the integration layer and the data clusters can be dynamic (based on the actual data requests of the connected applications/users) or pre-configured. The integration platform 400 uses a name service to process requests from user applications to locate data objects in the integration layer 404 and backbone layer 402. The backbone layer 402 can be implemented as a database that stores the data object model 406. The integration layer 404 can be implemented as multiple databases, where each separate database of the integration layer 404 is referred to herein as an "instance" of the integration layer. Although each instance of the integration layer 404 can be implemented as a database, the present invention Is not limited thereto, and the instances of the integration layer 404 can be implemented without databases, for example using flat files. For example, the databases of the integration layer 404 can be distributed on multiple computers. In one possible implementation, groups of users can be assigned to local databases of the integration layer 404. For example, users 1, 2, and 3 and users 4, 5, and 6 can be assigned to separate local databases of the integration layer 404. According to another possible implementation, a user can be assigned to a particular database (or "instance") of the integration layer 404 when the user connects to the integration layer 404. For example, a user can be assigned to a particular instance of the integration layer 404 based on what data the user is modifying.

When a user needs to author or modify one or more objects, the corresponding clusters are locked in the backbone layer 402 and loaded into an instance of the integration layer 404. The individual objects are locked In the integration layer 404 and opened in an authoring application used by the user. Other users can connect via an authoring application to the instance of the integration layer 404 in order to modify unlocked objects in the clusters loaded in the integration layer 404. When an object is locked, the particular application that applied the lock can modify the object, and all other applications can view, but not modify the object. When a cluster is locked on the backbone layer 402, applications connected to the particular instance of the integration layer 404 that has loaded the cluster can modify the objects in the cluster, but other applications (connected to other integration layer instances) can only view the objects. When a user is done modifying an object, the data is automatically updated for users connected to the same instance of the integration layer 404 (i.e., users on the same team), and notification of the changes is sent to other Instances of the integration layer 404 (i.e., other teams).

The system of FIG. 4 fulfills the requirements for cross-team and team internal collaboration, and is advantageous over the conventional systems described above for additional reasons. The system of FIG. 4 does not require a fixed grouping of users into teams. Also, the users are not aware of the clustering of data, and only the object granularity of the integration layer 404 is known to the users. Further, the users do not need to manually ensure the correct workflow to ensure fidelity of the project data.

In a possible implementation, the applications (Tools A, B, and C) may be run on computers of the respective users, and the backbone layer 402 and integration layer 404 may be implemented on a central server computer or distributed across multiple server computers.

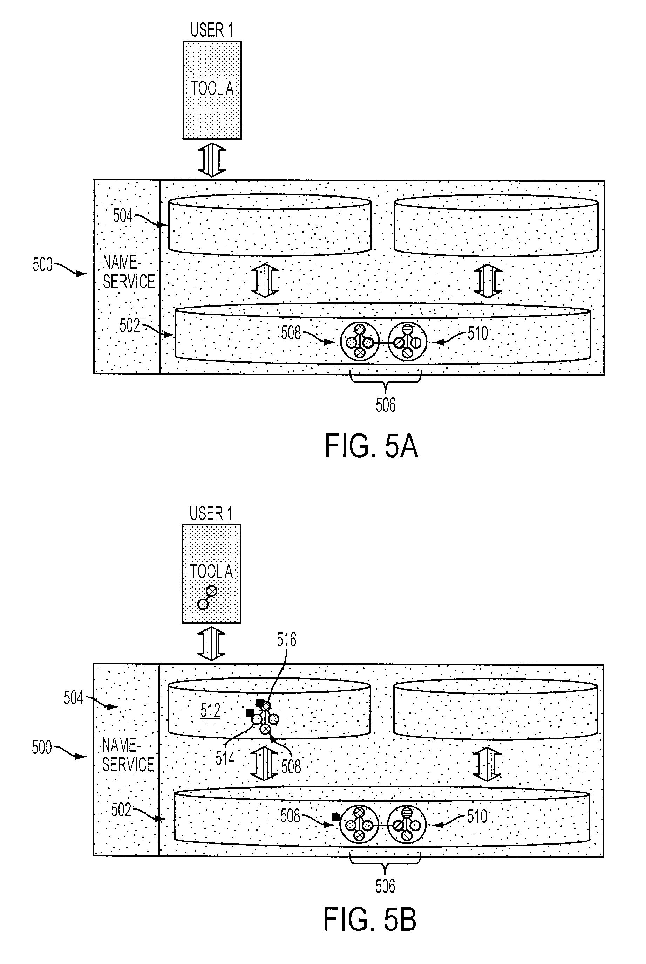

FIGS. 5A - 5F illustrate dynamic behavior of the collaborative authoring system of FIG. 4 according to an embodiment of the present invention. In FIGS. 5A - 5F, the integration platform 500, backbone layer 502, and integration layer 504 correspond to the integration platform 400, backbone layer 402 and integration layer 404 illustrate in FIG. 4.

As illustrated in FIG. 5A, the data object model 506 is subdivided into clusters 508 and 510 in the backbone layer 502. User 1 wants to load (via Tool A) some part of the project data. The name service determines if this data has been loaded into the integration layer 504 already. In FIG. 5A, no data has been loaded into the integration layer 504. Therefore, the name service locates the data on the backbone layer 502.

As illustrated in FIG. 5B, the cluster 508 in which the data is held is locked (shown as black squares) on the backbone layer 502, and the cluster 508 Is loaded into an instance 512 of the integration layer 504. It Is also possible that the required data is held in more than one cluster, in which case all of the corresponding clusters are locked on the backbone layer 502 and loaded to the Integration layer 504. In the instance 512 of the integration layer 504, only those objects 514 and 516 which user 1 wants to modify are locked. It is possible to delay the locks on the backbone 502 and the integration layer 504 until user 1 actually starts to modify the data.

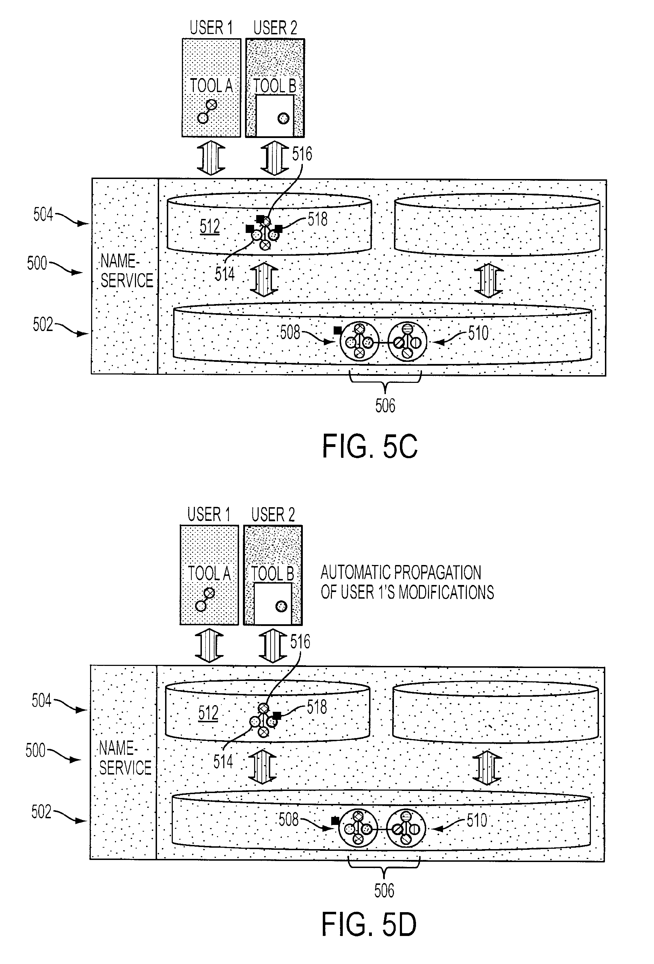

As illustrated in FIG. 5C, user 2 wants to modify data (via Tool B) that is closely related to the data being modified by user 1. The name service tries to locate the data on the integration layer 504, In this case, it succeeds. An additional lock is set on the instance 512 of the integration layer 504 to lock object 518 containing the data to be modified by user 2.

As illustrated in FIG. 5D, user 1 saves the modifications to objects 514 and 516. The modifications are immediately visible to user 2. The locks are removed from objects 514 and 516 on the integration layer 504. The data is also written back to the backbone layer 502. According to a possible implementation, is it possible to have two operations from a user's point of view: "save" to update the data on the integration layer 504 and "check in" to update the data also in the backbone layer 502. In this example, a "save" is considered to update the integration layer 504 as well as the backbone layer 502.

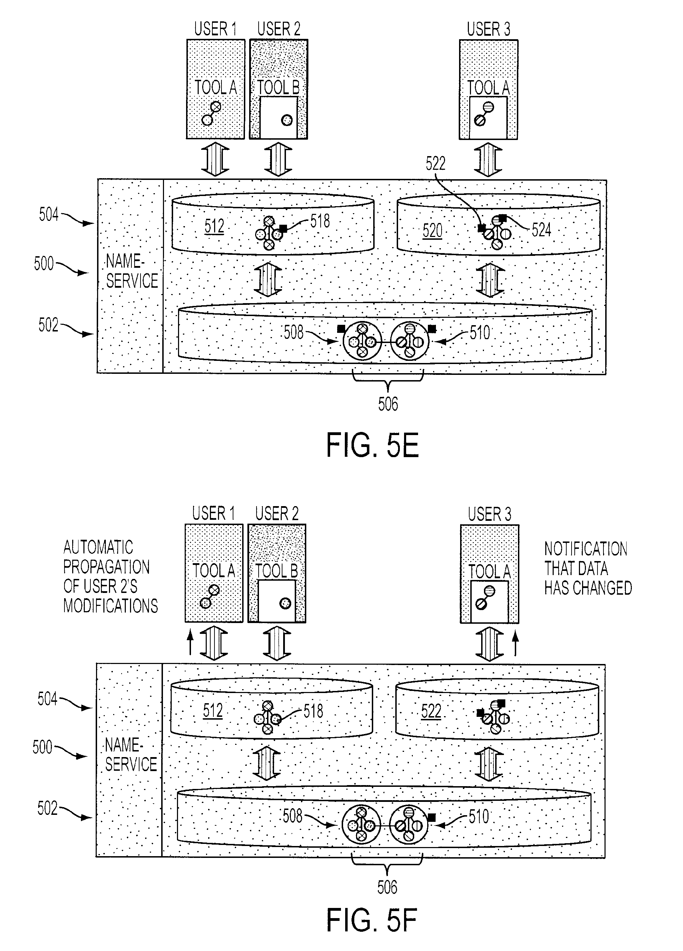

As illustrated in FIG. 5E, user 3 wants to modify data that belongs to cluster 510. For example, different clusters can correspond to data relating to different parts of a manufacturing plant. The name service determines if this data has been loaded into the integration layer 504 already. Since cluster 510 has not yet been loaded to the integration layer 504, the name service locates the data on the backbone layer 502. The cluster 510 in which the data is held is locked on the backbone layer 502, and the cluster 510 is loaded into another instance 520 of the integration layer 504. In the instance 520 of the integration layer 504, only those objects 522 and 524 which user 3 wants to modify are locked.

As illustrated in FIG. 5F, user 2 saves the modifications to object 518. These modifications are immediately visible to user 1. The lock is removed from object 518 on the integration layer 504, and the data is updated on the backbone layer 502. Because the last lock on the instance 512 of the integration layer 504 has been removed, the lock on the cluster 508 is also removed from on the backbone layer 502. User 3 is notified that a change has occurred because there is a link between the two clusters 50B and 510 of data, but user 3 can decide when to update his data. It is possible that the notification sent to user 3 can exactly specify what objects have been changed, even though the backbone layer 502 is only aware of the clusters 508 and 510. This can be implemented by "notification objects" on the backbone layer 502. The content of these objects is filled by the integration layer 504, which is aware of the individual objects. The backbone layer 502 can send a notification that the notification object has changed, user 3 can be notified about which objects in cluster 508 have changed by reading the notification object via Tool A and the integration layer 504.

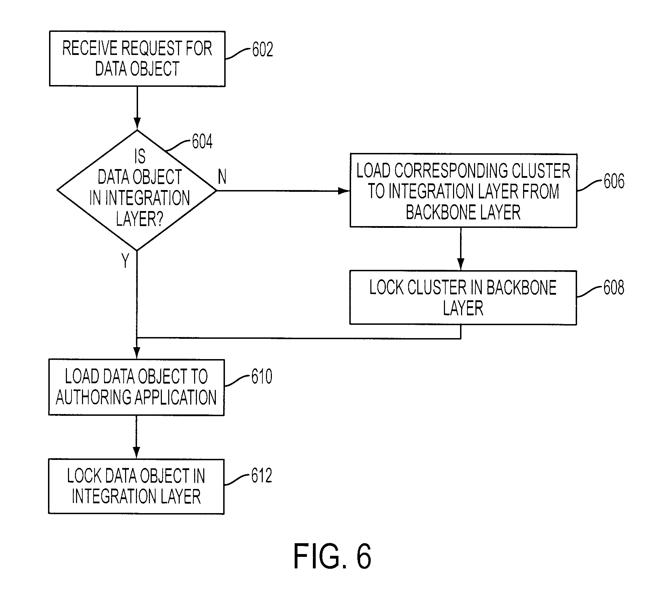

FIG. 6 illustrates a method of loading data to be modified in a collaborative authoring system according to an embodiment of the present invention. As illustrated in FIG. 6, at step 602, a request is received at the integration platform for a data object. The request is received at the integration platform from an authoring application of a user. The request can be manually generated by a user or automatically generated by the authoring application in response to the user beginning work on the corresponding data.

At step 604, it is determined whether the data object is currently stored in the integration layer. For example, the integration platform can utilize a name service to determine whether the data object is stored in the integration layer and to find the data object in the backbone layer. If the data object is stored in the integration layer, the method proceeds to step 610. If the data object is not stored in the integration layer, the method proceeds to step 606.

If the data object is not currently stored in the integration layer, at step 606, the corresponding cluster containing the data object is loaded to the integration layer from the backbone layer, and at step 608, the cluster containing the data object is locked in the backbone layer. As described above, when a cluster is locked, the data in the cluster can only be modified by users accessing the data via the integration layer instance which has applied the lock. Other users may view the data in the cluster, but not modify the data. If multiple data objects are requested, and the data objects are in different clusters, all of the corresponding clusters are locked and loaded to the integration layer.

At step 610, the requested data object is loaded to the authoring application from the integration layer, and at step 612, the data object is locked in the integration layer. Once it is determined that the requested object is stored in an instance of the integration layer (step 604) or the requested data object is loaded to the instance of the integration layer (step 606), the authoring application of the user connects to the instance of the integration layer and loads the data object. The data object is locked so only the particular user can modify the data object. The user can then modify the data in the object or author new data to the data object.

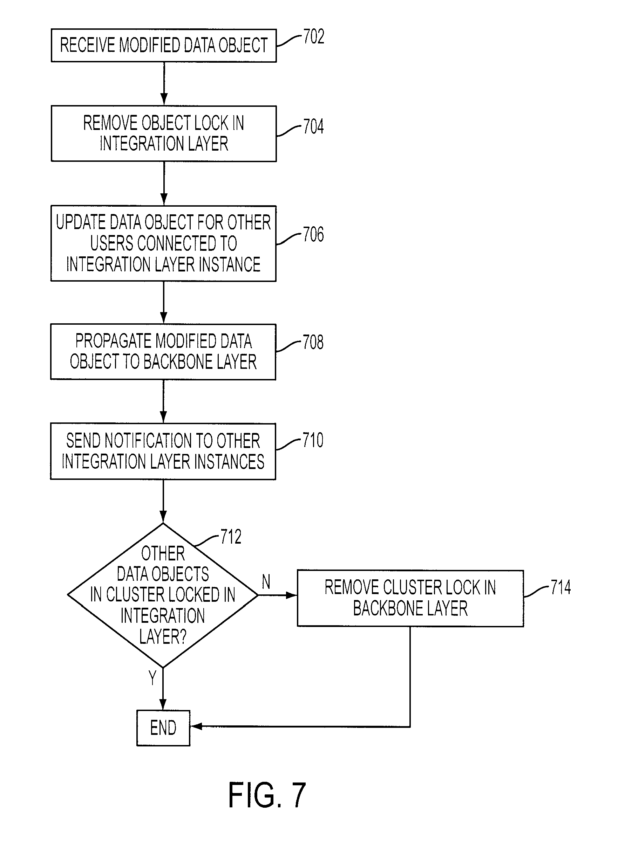

Once the data is modified, the modified data must be saved and published to other users of the collaborative authoring system. FIG. 7 illustrates a method of saving modified data in a collaborative authoring system according to an embodiment of the present invention. As illustrated in FIG. 7, at step 702, a modified data object is received from an authoring application at the integration layer. For example, the modified data may be received in response to a "save" or "update" command in the authoring application, or in response to a user exiting the authoring application. The modified data is stored in the integration layer.

At step 704, the object lock is removed from the corresponding data object in the integration layer. At this point, other users can freely edit or author the modified data.

At step 706, the data object is updated for other users (applications) connected to the integration layer instance. Accordingly, the modifications of the data object are immediately entered for users working on closely related data (i.e., in the same cluster).

At step 708, the modified data object is propagated to the backbone layer. The modifications to the data object are stored in the data object model stored in the backbone layer. At step 710, notification is sent to other integration layer instances. In particular, the backbone layer sends notification to any integration layer instance that has locked a cluster that is linked to the cluster in which the modified data object resides. This allows users working on data in such clusters to control when to incorporate these changes into the data on which they are working.

At step 712, it is determined whether any other data objects in the cluster of the modified data object are locked in the integration layer. If any other data object in the cluster is locked in the integration layer, the method ends. If no other data object in the cluster is locked in the integration layer, the method proceeds to step 714. At step 714, the cluster lock on the corresponding cluster of data objects in the backbone layer is removed. At this point, this cluster of data objects can be loaded from the backbone layer to any integration layer instance and the data objects within can be modified.

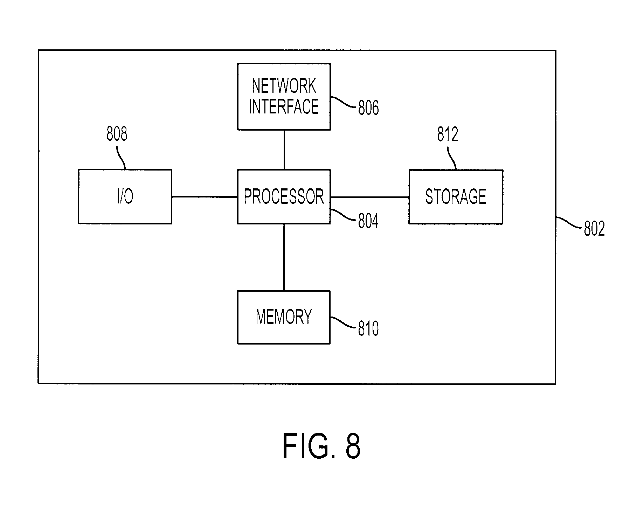

The integration platform, including the integration layer and the backbone layer, along with the authoring applications, and the above-described collaborative authoring methods, may be implemented on a computer or network of computers using well-known computer processors, memory units, storage devices, computer software, and other components. A high level block diagram of such a computer is illustrated in FIG. 8. Computer 802 contains a processor 804 which controls the overall operation of the computer 802 by executing computer program instructions which define such operation. The computer program instructions may be stored in a storage device 812 (e.g., magnetic disk) and loaded into memory 810 when execution of the computer program instructions is desired. Thus, the method steps illustrated in FIGS. 5A-5F, 6, and 7 can be implemented by computer program instructions stored in the memory 810 and/or storage 812 and controlled by the processor 804 executing the computer program instructions. Furthermore, the integration platform and the applications may also be implemented using computer program instructions stored in the memory 810 and/or storage 812 and controlled by the processor 804 executing the computer program instructions. The computer 802 also includes one or more network interfaces 806 for communicating with other devices via a network. The computer 802 also includes other input/output devices 808 that enable user interaction with the computer 802 (e.g., display, keyboard, mouse, speakers, buttons, etc.) One skilled in the art will recognize that an implementation of an actual computer could contain other components as well, and that FIG. 8 Is a high level representation of some of the components of such a computer for illustrative purposes.
A computer readable medium encoded with computer executable instructions for enabling collaborative authoring of data between multiple authoring applications, the computer executable instructions defining steps comprising: receiving a request for at least one data object from an authoring application at an integration platform; determining whether the at least one data object is stored in an integration layer of the integration platform; if the at least one data object is not stored in the integration layer: loading at least one data cluster including the at least one data object to the integration layer from a backbone layer of the integration platform, and locking the at least one data cluster on the backbone layer; loading the at least one data object from the integration layer to the authoring application; and locking the at least one data object in the integration layer.
The computer readable medium as above, wherein the computer executable instructions defining the step of loading the at least one data object from the integration layer to the authoring application comprise computer executable instructions defining the steps of: connecting the authoring application to an instance of the integration server where the at least one data object is stored; and loading the at least one data object from the instance of the integration server.
The computer readable medium as above, wherein the computer executable instructions defining the step of loading at least one data cluster including the at least one data object to the integration layer from a backbone layer of the integration platform comprise computer executable instructions defining the step of: loading the at least one data cluster to a local database of the integration layer that is associated with a user of the authoring application.
The computer readable medium as above, further comprising computer executable instructions defining the steps of: receiving at the integration layer the at least one data object modified by the authoring application; removing an object lock from the at least one data object in the integration layer; propagating the modified at least one data object to the backbone layer; determining whether other data objects in the at least one data cluster are locked in the integration layer; and if no other data objects in the at least one data cluster are locked in the integration layer, removing a cluster lock from the at least one data cluster in the backbone layer.
The computer readable medium as above, further comprising computer executable instructions defining the step of: updating the at least one data object in other authoring applications connected to a same instance of the integration layer at which the at least one data object is locked, in response to said step of receiving the modified at least one data object.
The computer readable medium as above, further comprising computer executable instructions defining the step of: sending notification of the modified at least one data object to different instances of the integration layer from an instance of the integration layer at which the modified at least one data object is received, in response to said step of propagating the modified at least one data object to the backbone layer.
The computer readable medium as above, wherein the computer executable instructions defining the step of sending notification of the modified at least one data object to different instances of the integration layer from an instance of the integration layer at which the modified at least one data object is received comprise computer executable instructions defining the step of: sending the notification of the modified at least one data object to instances of the integration layer storing data clusters linked to the at least one data cluster in the backbone layer.

The foregoing Detailed Description is to be understood as being in every respect illustrative and exemplary, but not restrictive, and the scope of the invention disclosed herein is not to be determined from the Detailed Description, but rather from the claims as interpreted according to the full breadth permitted by the patent laws. It is to be understood that the embodiments shown and described herein are only illustrative of the principles of the present invention and that various modifications may be implemented by those skilled in the art without departing from the scope of the invention as defined by the claims. Those skilled in the art could implement various other feature combinations without departing from the scope of the invention as defined by the claims.

## Claims

1. A method for enabling collaborative authoring of data between multiple authoring applications, comprising:
receiving a request for at least one data object from an authoring application at an integration platform;
determining whether the at least one data object is stored in an integration layer of the integration platform;
if the at least one data object is not stored in the integration layer:
loading at least one data cluster including the at least one data object to
the integration layer from a backbone layer of the integration platform, and
locking the at least one data cluster on backbone layer;
loading the at least one data object from the integration layer to the authoring application; and
locking the at least one data object in the integration layer.

2. The method of claim 1, wherein said step of determining whether the at least one data object is stored in an integration layer of the integration platform comprises:
determining whether the at least one data objection is stored in the integration layer using a name service.

3. The method of claim 2, wherein said step of loading at least one data cluster including the at least one data object to the integration layer from a backbone layer of the integration platform comprises:
retrieving the at least one data cluster from the backbone layer using the name service.

4. The method of claim 1, wherein said step of loading the at least one data object from the integration layer to the authoring application comprises:
connecting the authoring application to an instance of the integration server where the at least one data object is stored; and
loading the at least one data object from the instance of the integration server, or wherein said step of loading at least one data cluster including the at least one data objection to the integration layer from a backbone layer of the integration platform comprises:
loading the at least one data cluster to a local database of the integration layer that is associated with a user of the authoring application.

5. The method of claim 1, wherein the at least one data object is modified by the authoring application, further comprising:
receiving the modified at least one data object at the integration layer;
removing an object lock from the at least one data object in the integration layer;
propagating the modified at least one data object to the backbone layer;
determining whether other data objects in the at least one data cluster are locked in the integration layer; and
if no other data objects in the at least one data cluster are locked in the integration layer, removing a cluster lock from the at least one data cluster in the backbone layer.

6. The method of claim 5, further comprising:
updating the at least one data object in other authoring applications connected to a same instance of the integration layer at which the at least one data object is locked, in response to said step of receiving the modified at least one data object.

7. The method of claim 5, further comprising:
sending notification of the modified at least one data object to different instances of the integration layer from an instance of the integration layer at which the modified at least one data object is received, in response to said step of propagating the modified at least one data object of the backbone layer.

8. The method of claim 7, wherein said step of sending notification of the modified at least one data object to different instances of the integration layer from an instance of the integration layer at which the modified at least one data object is received comprises:
sending the notification of the modified at least one data object to instances of the integration layer storing data clusters linked to the at least one data cluster in the backbone layer.

9. A system for enabling collaborative authoring of data between multiple authoring applications, comprising:
means for receiving a request for at least one data object from an authoring application at an integration platform;
means for determining whether the at least one data object is stored in an integration layer of the integration platform;
means for loading at least one data cluster including the at least one data object to the integration layer from a backbone layer of the integration platform;
means for locking the at least one data cluster on the backbone layer;
means for loading the at least one data object from the integration layer to the authoring application; and
means for locking the at least one data object in the integration layer.

10. The system of claim 9, wherein said means for loading the at least one data object from the integration layer to the authoring application comprises:
means for connecting the authoring application to an instance of the integration server where the at least one data object is stored; and
means for loading the at least one data object from the instance of the integration server, or wherein said means for loading at least one data cluster including the at least one data object to the integration layer from a backbone layer of the integration platform comprises:
means for loading the at least one data cluster to a local database of the integration layer that is associated with a user of the authoring application.

11. The system of claim 9, further comprising:
means for receiving at the integration layer the at least one data object modified by the authoring application;
means for removing an object lock from the at least one data object in the integration layer;
means for propagating the modified at least one data object to the backbone layer;
means for determining whether other data objects in the at least one data cluster are locked in the integration layer; and
means for removing a cluster lock from the at least one data cluster in the backbone layer if no other data objects in the at least one data cluster are locked in the integration layer.

12. The system of claim 11, further comprising:
means for updating the at least one data object in other authoring applications connected to a same instance of the integration layer at which the at least one data object is locked in response receiving the at least one data object modified by the authoring application.

13. The system of claim 11, further comprising:
means for sending notification of the modified at least one data object to different instances of the integration layer from an instance of the integration layer at which the modified at least one data object is received.

14. The system of claim 13, wherein said means for sending notification of the modified at least one data object to different instances of the integration layer from an instance of the integration layer at which the modified at least one data object is received comprises:
means for sending the notification of the modified at least one data object to instances of the integration layer storing data clusters linked to the at least one data cluster in the backbone layer.

15. A computer readable medium encoded with computer executable instructions for enabling collaborative authoring of data between multiple authoring applications, the computer executable instructions defining the method of any one of claims 1 to 8.
